# EUROPEAN PATENT APPLICATION

(11) **EP 2 031 887 A1**
(43) Date of publication of application: **04.03.2009**
(21) Application number: 08715239.3
(22) Date of filing: 21.03.2008
(51) Int. Cl.: H04Q 7/28

(54) **METHOD AND SYSTEM FOR CONTROLLING AD PLAYING AND PLAYING AD IN ONE GROUP CONVERSATION**

(30) Priority: 28.03.2007 CN 200710073709
(71) Applicant: Huawei Technologies Co., Ltd., Longgang District, Shenzhen Guangdong 518129 (CN)
(72) Inventor: ZHAO, Yang, Guangdong 518129 (CN); HU, Hanqiang, Guangdong 518129 (CN); GU, Chong, Guangdong 518129 (CN)
(74) Representative: Körber, Martin Hans
(86) International application number: PCT/CN2008/070503
(87) International publication number: WO 2008/116414

(57) **Abstract**

A method for controlling advertisement play in a group session disclosed herein includes: obtaining an address of an advertisement service platform corresponding to a group member and parameters of an personalized advertisement of the group member; sending to the advertisement service platform an indication message of playing the advertisement according to the address of the advertisement service platform, where the indication message carries the parameters of the personalized advertisement of the group member. A method for playing an advertisement in a group session includes: obtaining the indication message of playing the advertisement; and playing the advertisement to the terminal of the group member according to the indication message of playing the advertisement. Moreover, the present invention discloses a system for playing an advertisement in a group session, a control function server, and an advertisement service platform. The present invention enables playing of an advertisement to a group member in a group session.

## Description

This application claims a priority from the Chinese Patent Application No. 200710073709.4, filed with the Chinese Patent Office on Mar. 28, 2007 and entitled " a method and system for playing advertisements in group sessions ", the contents of which are incorporated herein by reference in their entirety.

### FIELD OF THE INVENTION

The present invention relates to the communication field, and in particular, to a method and system for controlling advertisement playing and playing advertisements in group sessions.

### BACKGROUND

With the development of the 3G technologies and networks in China, operators attach more and more importance to the development and popularization of mobile data services. The commercial pattern of advertisements has changed now, and Internet advertisement and mobile advertisement are on the rise prominently. A mobile advertisement service means: through the commercial paid information which is propagated on mobile media, influencing the attitude, intention and behavior of the information recipient. This service is characterized by individualization, interaction, mobility, cost-effectiveness, scenario-specific, and efficiency.

In the existing mobile communication field, group sessions include Push to Talk over Cellular (PoC) session, Instant Message (IM) session, and Converged IP Messaging (CPM) session. The methods of implementing such sessions are described in detail in the Open Mobile Alliance (OMA) standard. The essence of these methods is to create a session with every session participant by using a control server. Afterward, the media of all parties are forwarded and distributed along the route through the control server, thus completing media conversation or message session among all session participants.

However, none of the foregoing group sessions such as PoC, IM and CPM sessions supports the advertisement service.

### SUMMARY

The present invention provides a method for playing advertisements in a group session, and the method for playing advertisements in a group session in an embodiment of the present invention includes:
obtaining the address of the advertisement service platform corresponding to the group member and the parameters of the personalized advertisement of the group member; and
sending to the advertisement service platform an indication message of playing an advertisement according to the address of the advertisement service platform, where the indication message carries parameters of the personalized advertisement of the group member.

Further, a method for playing advertisements in a group session in an embodiment of the present invention includes:
obtaining the indication message of playing an advertisement, where the message carries the parameters of the personalized advertisement of the group member; and
playing an advertisement to the terminal of the group member according to the indication message of playing an advertisement.

Further still, a system for playing advertisements in a group session in an embodiment of the present invention includes:
a control function server is adapted to obtain the address of the advertisement service platform corresponding to the group member and the parameters of the personalized advertisement of the group member, and send to the advertisement service platform an indication message of playing an advertisement according to the address of the advertisement service platform, where the indication message carries parameters of the personalized advertisement of the group member; and
an advertisement service platform is adapted to play an advertisement to the group member according to the parameters of the personalized advertisement.

Further still, a control function server provided in an embodiment of present invention includes:
a first module is adapted to obtain the address of the advertisement service platform corresponding to the group member and the parameters of the personalized advertisement of the group member; and
a second module is adapted to send to the advertisement service platform an indication message of playing an advertisement according to the address of the advertisement service platform, where the indication message carries parameters of the personalized advertisement of the group member.

Further still, an advertisement service platform provided in an embodiment of the present invention includes:
a first module is adapted to receive the indication message of playing an advertisement, where the indication message carries the parameters of the personalized advertisement of the group member; and
a second module is adapted to play an advertisement to the terminal of the group member according to the parameters of the personalized advertisement.

### BRIEF DESCRIPTION OF THE DRAWINGS

Figure 1 shows a system for playing advertisements in a group session according to an embodiment of the present invention;

Figure 2 is a flowchart of a method for playing advertisements to a calling terminal (namely, a first terminal) in a group session according to an embodiment of the present invention; and

Figure 3 is a flowchart of a method for playing advertisements to a called terminal (namely, a second terminal) in a group session according to an embodiment of the present invention.

### DETAILED DESCRIPTION

The embodiments of the present invention aim to provide a method and system for playing advertisements in a group session. A control function server is used to obtain the address of the advertisement service platform corresponding to the group member and the parameters of the personalized advertisement of the group member. The control function server sends to the advertisement service platform an indication message of playing an advertisement according to the address of the advertisement service platform, where the indication message carries parameters of the personalized advertisement of the group member. The advertisement service platform plays an advertisement to the terminal of the group member according to the parameters of the personalized advertisement.

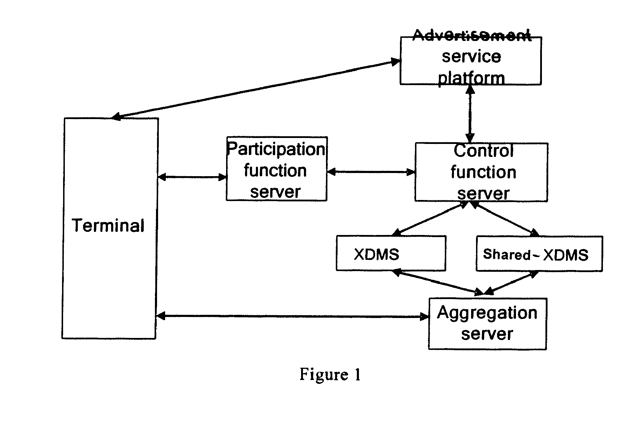

As shown in Figure 1, a system for playing advertisements in a group session according to an embodiment of the present invention includes an advertisement service platform, a terminal, a participation function server, a control function server, a Presence extensible Markup Language (XML) Document Management System (XDMS) or shared-XDMS, and an aggregation server.

The advertisement service platform is an independent public advertisement service platform of operators. An advertisement service platform is created for each telecom local network (home domain). For the advertisement service controlled by the control function server, the advertisement service platform accepts the request of the control function server, creates a point-to-point session with the calling party involved in the group session or the called party who has answered the call respectively, and retrieves and plays the personalized advertisement. In an embodiment of the present invention, the group member in a group session may belong to different domains. Therefore, each different group member may correspond to a different advertisement service platform. It is supposed that the advertisement service platform corresponding to the group member who acts as a calling party is a first advertisement service platform, and the advertisement service platform corresponding to the group member who acts as a called party answering the call first is a second advertisement service platform.

The terminal is adapted to join a group session and hear the advertisement played by the advertisement service platform. In addition, the terminal sets parameters (for example, type of advertisement preferred by group members, and advertisement identifier) of the personalized advertisement in the XDMS or shared-XMDS through an aggregation server. At the time of creating a group in a group session, the group creator generally sets the parameters such as the advertisement service identifier of the advertisement to allow the group to play and the duration of playing the advertisement, through the terminal. After the group is created completely, the group creator may also set the type of the advertisement preferred by group members for other group members as requested. Because there is more than one group member involved in the group session, there is more than one terminal. In the embodiments of the present invention, the terminal that originates the call is a first terminal, and the terminal that receives the call is a second terminal.

The participation function server is adapted to forward the message from the terminal to the control function server, and forward the message of the control function server. In addition, after receiving a request of creating a group session from the calling terminal, the participation function server modifies the request of creating a group session, puts the address of the advertisement service platform in the domain that contains the participation function server into the modified request of creating a group session, and sends the request to the control function server. Alternatively, after receiving a "200 OK" message (indicating consent of joining the session) from the called terminal, the participation function server puts the address of the advertisement service platform in the domain that contains the participation function server into the modified off-hook signaling, and sends the signaling to the control function server. In an embodiment of the present invention, the group member in a group session may belong to different domains. Therefore, each group member may correspond to a different participation function server. It is supposed that the participation function server corresponding to the group member who acts as a calling party is a first participation function server, and the participation function server corresponding to the group member who acts as a called party answering the call first is a second participation function server.

The control function server is adapted to control distribution of media in a group session ;obtain the address of the advertisement service platform from the modified request of creating a group session or from the modified off-hook signaling; request the advertisement service platform to create a point-to-point session with the calling party involved in the group session and the called party who has answered the call respectively according to the address of advertisement service platform; obtain parameters of the personalized advertisement from the XDMS or shared-XMDS, where the parameters are set by the calling party involved in the group call and/or the called party who has answered the call, and send the parameters to the advertisement service platform, whereupon the advertisement service platform plays the advertisement to the calling party and the called party who has answered the call respectively according to the parameters of the personalized advertisement; begin the session between the calling party and the called party after receiving a "notify" message that indicates completion of playing the advertisement at the advertisement service platform; and store the obtained address of the advertisement service platform and the parameters of the personalized advertisement which are obtained from the XDMS or shared-XMDS and set by the calling party in the group session or the called party who has answered the call.

The XDMS or shared-XMDS stores the data related to the group service and advertisement service. The data related to the advertisement service includes: advertisement type, advertisement identifier, and duration of playing the advertisement. Moreover, an advertisement service identifier is set for the group that allows play of the advertisement so that the advertisement service identifier is bound to the group. The data related to the advertisement service and stored in the XDMS or shared-XMDS is set according to the setting of the terminal.

As an interface between the terminal and the XDMS or shared-XMDS, the aggregation server is adapted to receive the message of setting parameters of the personalized advertisement from the terminal, and send the message to the XDMS or shared-XMDS. The XDMS or shared-XMDS sets the parameters of the personalized advertisement of the group member according to the advertisement type and advertisement identifier carried in the message of setting the parameters of the personalized advertisement.

A control function server provided in an embodiment of present invention includes:
a first module is adapted to obtain the address of the advertisement service platform corresponding to the group member and the parameters of the personalized advertisement of the group member; and a second module is adapted to send to the advertisement service platform an indication message of playing an advertisement according to the address of the advertisement service platform, where the indication message carries parameters of the personalized advertisement of the group member. The first module obtains the address of the advertisement service platform corresponding to the group member from the participation function server. The XDMS or shared-XDMS is adapted to provide the control function server with the parameters of the personalized advertisement of the group member.

An advertisement service platform provided in an embodiment of the present invention includes a first module, adapted to receive the indication message of playing an advertisement, where the indication message carries the parameters of the personalized advertisement of the group member, and a second module, adapted to play an advertisement to the terminal of the group member according to the parameters of the personalized advertisement. The indication message of playing an advertisement also carries the address of the terminal. The advertisement service platform further includes a third module, adapted to create a session with the terminal according to the address of the terminal. The second module plays the advertisement to the terminal in the created session. The third module includes a fourth module, adapted to send a message of playing an advertisement to the terminal according to the address of the terminal, and a fifth module, adapted to receive the response message that allows play of the advertisement from the terminal. The indication message of playing the advertisement also carries the duration of playing the advertisement, and the second module is further adapted to monitor the expiry of the duration of playing the advertisement and stop playing the advertisement to the terminal.

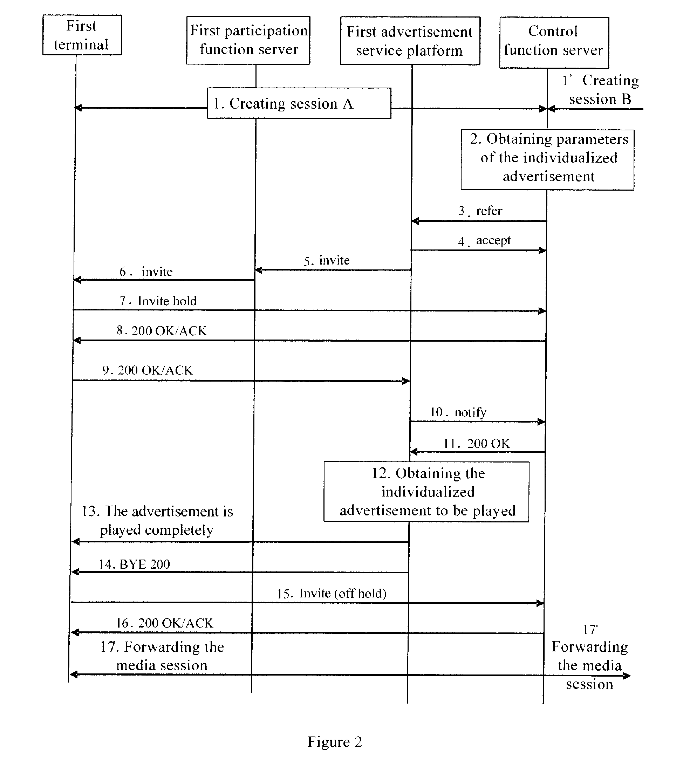

As shown in Figure 2, a method for playing advertisements to the calling terminal in a group session in an embodiment of the present invention includes the following steps:

Step 1: The first terminal corresponding to the calling party sends a request of creating a session to the control function server. After finishing the authentication and legality check for the first terminal, the control function server sends a request of creating a group session to the terminals (including at least the second terminal) corresponding to the members of the group which includes the first terminal. A session between the control function server and the first terminal (namely, session A) and a session between the control function server and the second terminal (namely, session B) are created.

In the process of creating a session, after receiving the request of creating a group session from the first terminal, the first participation function server which includes the first terminal puts the address of the advertisement service platform of the domain that includes the first terminal into the request of creating a group session modified by the participation function server, and sends the request to the control function server. After the second terminal returns a "200 OK" response message that indicates consent of joining the session, other members in the group (for example, the second participation function server in the domain that includes the called terminal) puts the address of the advertisement service platform in the domain that includes the second terminal into the modified "200 OK" message that indicates consent of joining the session, and sends the message to the control function server. From the modified request of creating a group session or the modified response message that indicates consent of joining the session, the control function server obtains and stores the address of the advertisement service platform.

Step 2: The control function server searches the XDMS or shared-XDMS, and obtains the parameters of the personalized advertisement of each member in the group to which the users corresponding to the first terminal belong, and the parameters are stored in the XDMS or shared-XDMS, and includes, for example, advertisement type, advertisement service identifier, preset advertisement type preferred by each member of the group, and duration of playing the advertisement set by the group creator.

Step 3: According to the address of the first advertisement service platform, the control function server sends an indication message of playing an advertisement (namely, "refer" message) to the first advertisement service platform. The "refer" message carries the parameters of the personalized advertisement obtained by the control function server from the XDMS or shared-XDMS, duration of playing the advertisement, and the address of the first terminal.

Step 4: The first advertisement service platform accepts the message from the control function server A, and returns an "accept" response message to the control function server A.

Step 5: According to the address of the first terminal carried in the "refer" message, the first advertisement service platform sends an "Invite" message to the first participation function server in the domain that includes the first terminal, where the message may carry an automatic response identifier.

Step 6: The first participation function server forwards the "Invite" message to the first terminal.

Step 7: The first terminal sends an "Invite hold" request to the control function server, requesting to hold the session A between the first terminal and the control function server and wait.

Step 8: The control function server accepts the "Invite hold" request from the first terminal, returns a "200 OK/ACK" response message to the first terminal, and holds the session between the first terminal and the control function server.

Step 9: The first terminal sends a "200 OK/ACK" response message that allows play of the advertisement to the first advertisement service platform, namely, consents to create a session between the first terminal and the advertisement service platform and allows the advertisement service platform to play the advertisement to the first terminal.

Step 10: The first advertisement service platform sends a "notify" message about successful indication of the "refer" message to the control function server.

Step 11: The control function server returns a "200 OK" response message to the first advertisement service platform.

Step 12: According to the parameters of the personalized advertisement carried in the received "refer" message, the advertisement service platform obtains the personalized advertisement that needs to be played to the first terminal. Nevertheless, if the "refer" message also carries the duration of playing the advertisement, the advertisement service platform may also obtain the personalized advertisement whose play duration is equal to the duration of playing the advertisement carried in the "refer" message according to the parameters of the personalized advertisement.

Step 13: The first advertisement service platform plays an advertisement to the first terminal according to the obtained personalized advertisement.

Step 14: According to the duration of playing the advertisement service carried in the "refer" message, the first advertisement service platform detects expiry of the duration of playing the advertisement to the first terminal, and therefore stops playing the advertisement and sends a "BYE 200" message to the first terminal, namely, terminates the session between the first advertisement service platform and the first terminal. In step 12, if the advertisement service platform obtains an personalized advertisement according to the duration of playing the advertisement carried in the "refer" message, the advertisement service platform may also stop playing the advertisement upon completion of playing the obtained advertisement. Moreover, the advertisement service platform sends a "BYE 200" message to the first terminal, namely, terminates the session between the first advertisement service platform and the first terminal.

Step 15: The first terminal sends an "Invite (off hold)" request to the control function server, requesting the control function server to recover the session between the control function server and the first terminal.

Step 16: The control function server sends a "200 OK/ACK" response message to the first terminal, and recovers the session between the control function server and the first terminal.

Step 17: The control function server forwards the media session between the first terminal and the second terminal to the first terminal.

In this process, the duration of playing the advertisement to all terminals set by the group creator is the same. In step 2, the control function server performs step 2 after any called member of the group goes off-hook first to answer (in this embodiment, the second terminal acts as a called party and goes off-hook first to answer), and sends a "refer" message to the first advertisement service platform and the second advertisement service platform respectively. That is, the control function server performs step 3.

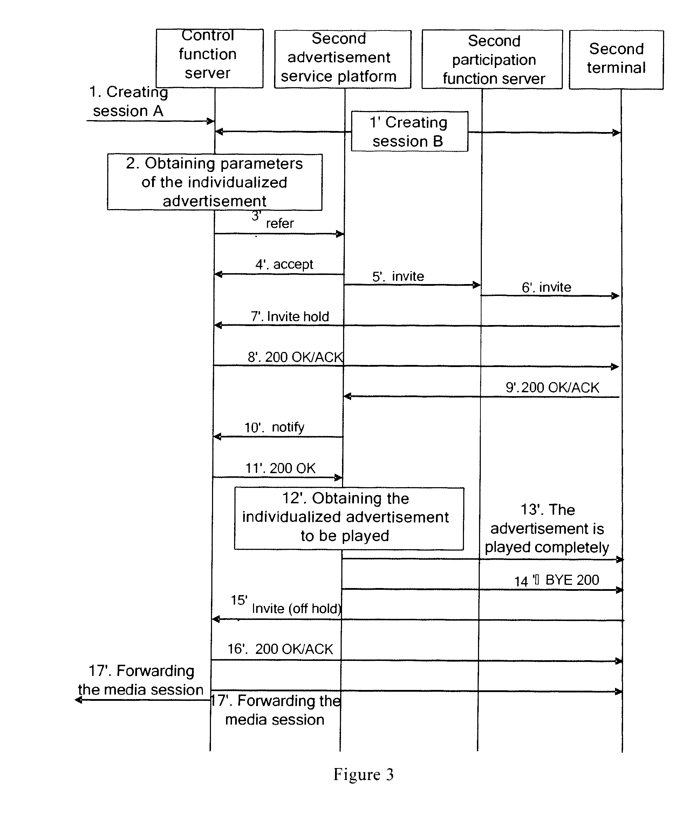

Figure 3 is a flowchart of a method for playing an advertisement to the called terminal in a group session in an embodiment of the present invention. As shown in Figure 3, step 1' to step 16' are a process in which the second advertisement service platform plays an advertisement to the called terminal (namely, the second terminal) and the control function server forwards the media session in the group session to the second terminal. The specific implementation is the same as step 1 to step 16, and is not detailed here any further. Before the remaining called party enters the conversation after going off-hook, the personalized advertisement is played to the remaining called party first, and then the remaining called party enters the conversation.

The technical solution in an embodiment of the present invention may be applied in a PoC group session, a CPM group session, or an IM group session. The detailed process is shown in Figure 2. The scenario of playing an advertisement in a PoC group session is: The group creator applies for a PoC group capable of playing advertisements, namely, correlating the advertisement service identifier with the group identifier. The group creator may set an advertisement type for each member in the PoC group respectively. This advertisement type is set by the group creator for each group member in the XDMS or shared-XDMS as requested by the group member. The group creator may also set a rule that allows the group member to set the advertisement type in the XDMS or shared-XDMS directly. After any member in the PoC group sends a request of a PoC group session through the first terminal, the advertisement service platform plays the personalized advertisement to the first terminal and the second terminal concurrently when the first called party goes off-hook through the second terminal. More particularly, the first advertisement service platform plays the advertisement to the first terminal, and the second advertisement service platform plays the advertisement to the second terminal. Then, the conversation begins between the calling party and the first called party. Before the remaining called party enters the conversation after going off-hook, the personalized advertisement is played to the remaining called party first, and then the remaining called party enters the conversation.

The scenario of playing an advertisement in the IM service and CPM service is:
The user applies for an IM group or CPM group capable of playing advertisements, namely, correlating the advertisement service identifier with the group identifier. The user sets the advertisement type preferred by each member of the IM/CPM group. When the calling party initiates an IM/CPM group session through the first terminal, after the first called party accepts the IM/CPM session request through the second terminal, the personalized IM/CPM advertisement is played to the first terminal and the second terminal concurrently. Afterward, an IM/CPM session begins between the first terminal and the second terminal. Before the remaining called party begins an IM or CPM session after accepting the IM or CPM session request through the terminal, the personalized IM/CPM advertisement is played to the remaining called party first, and then the remaining called party joins the IM/CPM session.

Although the invention has been described through some exemplary embodiments, the invention is not limited to such embodiments. It is apparent that those skilled in the art can make various modifications and variations to the present invention without departing from the spirit and scope of the present invention. The present invention is intended to cover these modifications and variations provided that they fall in the scope of protection defined by the following claims or their equivalents.

## Claims

1. A method for controlling advertisement play in a group session, comprising:
obtaining an address of an advertisement service platform corresponding to a group member, and parameters of an personalized advertisement of the group member; and
sending an indication message of playing the advertisement to the advertisement service platform according to the address of the advertisement service platform, wherein the indication message carries the parameters of the personalized advertisement of the group member.

2. The method of claim 1, wherein, the obtaining of the address of the advertisement service platform corresponding to the group member comprises:
obtaining the address of the advertisement service platform corresponding to the group member from a participation function server.

3. The method of claim 2, wherein:
the participation function server comprises a first participation function server and a second participation function server;
the terminal comprises a first terminal and a second terminal;
obtaining of the address of the advertisement service platform corresponding to the group member from the participation function server comprises:
modifying, by the first participation function server, a request of creating a group session sent by the first terminal, and putting the address of a first advertisement service platform into the modified request of creating a group session;
obtaining the corresponding address of the first advertisement service platform from the modified request of creating the group session sent by the first participation function server;
modifying, by the second participation function server, a message about consent of joining the session sent by the second terminal, and putting the address of the second advertisement service platform into the modified message about consent of joining the session; and
obtaining the corresponding address of the second advertisement service platform from the modified message about consent of joining the session sent by the second participation function server.

4. The method of claim 1, wherein, the obtaining of the parameters of the personalized advertisement of the group member comprises:
obtaining the parameters of the personalized advertisement of the group member through a Presence extensible Markup Language (XML) Document Management System (XDMS) or shared-XDMS.

5. The method of claim 1, wherein the indication message of playing the advertisement further comprises an address of a terminal.

6. The method of claim 5, wherein: before play of the advertisement, the method further comprises:
receiving a message of holding the session with the terminal sent by the terminal; and
returning a response message about consent of holding the session with the terminal to the terminal.

7. The method of claim 1, wherein the indication message of playing the advertisement further comprises duration of playing the advertisement.

8. The method of claim 7, wherein:
after completion of playing the advertisement, the method further comprises:
receiving an invitation request of recovering the session sent by the terminal; and
returning a confirmation response message to the terminal to recover the session, and forward a media session between terminals.

9. A method for playing an advertisement in a group session, comprising:
obtaining an indication message of playing the advertisement, wherein the message carries parameters of an personalized advertisement of a group member; and
playing the advertisement to a terminal of the group member according to the indication message of playing the advertisement.

10. The method of claim 9, wherein:
the indication message of playing the advertisement further comprises an address of a terminal;
before playing the advertisement to the group member according to the indication message of playing the advertisement, the method comprises:
sending a message of playing the advertisement to the terminal according to the address of the terminal; and
receiving a response message about consent of playing the advertisement from the terminal, and creating a session with the terminal.

11. The method of claim 10, wherein:
before receiving the response message about consent of playing the advertisement from the terminal, the method further comprises:
sending, by the terminal, a message of holding the session between the terminal and a control function server to the control function server; and
returning, by the control function server, a response message about consent of holding the session between the terminal and the control function server to the terminal.

12. The method of claim 9, wherein:
the indication message of playing the advertisement further comprises duration of playing the advertisement; and
the method further comprises sending a message to the terminal to terminate the session with the terminal upon completion of playing the advertisement.

13. The method of claim 9, wherein:
the indication message of playing the advertisement further carries duration of playing the advertisement; and
playing of the advertisement to the group member according to the indication message of playing the advertisement comprises playing the advertisement to the group member according to the parameters of the personalized advertisement and the duration of playing the advertisement.

14. The method of claim 13, wherein playing of the advertisement to the group member according to the parameters of the personalized advertisement and the duration of playing the advertisement comprises:
obtaining the personalized advertisement to be played according to the parameters of the personalized advertisement and the duration of playing the advertisement; and
playing the advertisement to the terminal according to the obtained advertisement.

15. A system for playing an advertisement in a group session, comprising:
a control function server, adapted to: obtain an address of an advertisement service platform corresponding to a group member and parameters of an personalized advertisement of the group member; send to the advertisement service platform an indication message of playing the advertisement according to an address of the advertisement service platform, where the indication message carries the parameters of the personalized advertisement of the group member; and
an advertisement service platform, adapted to play the advertisement to the group member according to the parameters of the personalized advertisement.

16. The system of claim 15, wherein:
the system further comprises a participation function server, which is adapted to provide the control function server with the address of the advertisement service platform corresponding to the group member.

17. The system of claim 15, wherein:
the system further comprises a Presence eXtensible Markup Language (XML) Document Management System (XDMS) or shared-XDMS; and
the XDMS or shared-XDMS is adapted to provide the control function server with the parameters of the personalized advertisement of the group member.

18. A control function server, comprising:
a first module, adapted to obtain an address of an advertisement service platform corresponding to a group member, and parameters of an personalized advertisement of the group member; and
a second module, adapted to send an indication message of playing advertisement to the advertisement service platform according to the address of the advertisement service platform, wherein the indication message carries the parameters of the personalized advertisement of the group member.

19. The control function server of claim 18, wherein:
the first module obtains the address of the advertisement service platform corresponding to the group member from a participation function server, and a Presence eXtensible Markup Language (XML) Document Management System (XDMS) or shared-XDMS is adapted to provide the control function server with the parameters of the personalized advertisement of the group member.

20. An advertisement service platform, comprising:
a first module, adapted to receive an indication message of playing an advertisement, wherein the indication message carries parameters of an personalized advertisement of a group member; and
a second module, adapted to play an advertisement to a terminal of the group member according to the parameters of the personalized advertisement.

21. The advertisement service platform of claim 20, wherein:
the indication message of playing the advertisement further carries an address of a terminal; and
the advertisement service platform further comprises:
a third module, adapted to create a session with the terminal according to an address of the terminal; and
the second module plays the advertisement to the terminal in the created session.

22. The advertisement service platform of claim 21, wherein the third module further comprises:
a fourth module, adapted to send to the terminal a message of playing the advertisement to the terminal according to the address of the terminal; and
a fifth module, adapted to receive a response message from the terminal indicating permission of playing the advertisement.

23. The advertisement service platform of claim 20, wherein:
the indication message of playing the advertisement also carries duration of playing the advertisement, and the second module is further adapted to monitor the expiry of the duration of playing the advertisement and stop playing the advertisement to the terminal.
